# DEMANDE DE BREVET EUROPEEN

(11) **EP 2 339 194 A1**
(43) Date de publication de la demande: **29.06.2011**
(21) Numéro de dépôt: 10290674.0
(22) Date de dépôt: 22.12.2010
(51) Int. Cl.: F16C 33/72, G01P 3/481

(54) **Palier à roulement comprenant un capot solidaire de l'organe fixe**

(30) Priorité: 23.12.2009 FR 0906345
(71) Demandeur: NTN-SNR Roulements, 74000 Annecy (FR)
(72) Inventeur: Morel, Bertrand, 74910 Challonges (FR)
(74) Mandataire: Sayettat, Julien Christian

(57) **Abrégé**

L'invention concerne un palier à roulement comprenant un organe intérieur tournant (3), un organe extérieur fixe (1) et des corps roulants (5) disposés dans un espace de roulement formé entre lesdits organes pour permettre leur rotation relative, ledit palier comprenant en outre un capot (11) solidaire de l'organe fixe (1) pour recouvrir latéralement ledit espace de roulement, le capot (11) comprenant un disque (12) pourvu d'une armature périphérique rigide (16) qui est emmanchée sur une portée de l'organe fixe (1), ladite armature étant équipée d'un bourrelet d'étanchéité (17) dudit emmanchement.

## Description

L'invention concerne un palier à roulement comprenant un organe intérieur tournant, un organe extérieur fixe et des corps roulants disposés dans un espace de roulement formé entre lesdits organes pour permettre leur rotation relative.

Dans une application particulière, le palier est destiné au montage d'une roue de véhicule automobile, notamment d'une roue non motrice de véhicule automobile.

Dans ce type de paliers, il se pose notamment le problème de la protection de l'espace de roulement vis-à-vis de la pollution du milieu environnant. Pour résoudre ce problème, il est connu d'utiliser un joint d'étanchéité disposé entre l'organe fixe et l'organe tournant afin d'empêcher le passage des polluants. Toutefois, les joints utilisés comprennent classiquement une lèvre frottante qui induit un couple supplémentaire lors de la rotation du palier.

Pour éviter ce couple de frottement, on a proposé de remplacer le joint d'étanchéité par un capot rigide qui est solidarisé, notamment par emmanchement, à l'organe fixe pour recouvrir latéralement l'espace de roulement et donc empêcher toute pénétration de polluants dans ledit espace.

Cette solution présente également l'avantage de pouvoir protéger un codeur solidarisé à l'organe tournant derrière le capot. En effet, de tels paliers, lorsqu'ils sont équipés d'un système capteur de vitesse de rotation, de position angulaire et/ou de sens de rotation, peuvent notamment être employés pour le montage d'une roue de véhicule automobile qui est pourvue d'un système d'antiblocage de ladite roue.

Toutefois, cette solution ne donne pas entièrement satisfaction relativement à la fiabilité de l'étanchéité au niveau de la zone de montage entre le capot rigide et l'organe fixe, notamment au regard des tests de brouillard salin avec cyclage thermique (test CCT) auxquels doivent satisfaire les paliers automobiles. L'invention a pour but de pallier aux problèmes de l'art antérieur en proposant notamment un palier à roulement équipé d'un capot dont l'étanchéité du montage sur l'organe fixe est améliorée tout en préservant la fiabilité du montage dudit capot sur ledit organe fixe.

A cet effet, l'invention propose un palier à roulement comprenant un organe intérieur tournant, un organe extérieur fixe et des corps roulants disposés dans un espace de roulement formé entre lesdits organes pour permettre leur rotation relative, ledit palier comprenant en outre un capot solidaire de l'organe fixe pour recouvrir latéralement ledit espace de roulement, ledit capot comprenant un disque pourvu d'une armature périphérique rigide qui est emmanchée sur une portée de l'organe fixe, ladite armature étant équipée d'un bourrelet d'étanchéité dudit emmanchement.

D'autres objets et avantages de l'invention apparaîtront dans la description qui suit, faite en référence aux figures annexées, dans lesquelles :
- la figure 1 représente partiellement et en coupe longitudinale un palier à roulement selon un premier mode de réalisation de l'invention ;
- la figure 2 représente partiellement et en coupe longitudinale un palier à roulement selon un deuxième mode de réalisation de l'invention.

En relation avec ces figures, on décrit ci-dessous un palier à roulement, en particulier pour le montage d'une roue non motrice d'un véhicule automobile.

Le palier comprend un organe extérieur fixe 1 comprenant une bride 2 pourvue de trous de fixation 2a agencés pour permettre la fixation dudit palier par vissage ou boulonnage, par exemple sur un élément de suspension du véhicule automobile. Le palier comprend également un organe intérieur tournant 3 qui, de façon non représentée, est agencé pour permettre l'association de la roue.

Entre ces deux organes 1, 3, un espace de roulement est formé pour permettre la rotation relative desdits organes autour d'un axe 4. Pour ce faire, chaque organe 1, 3 présente deux pistes de roulement de sorte à former entre lesdits organes deux chemins de roulement dans lesquels sont disposées respectivement une rangée de corps roulants 5 sous la forme de billes, lesdites billes étant maintenues dans une rangée par l'intermédiaire d'une cage de rétention 6.

Sur les figures, l'organe intérieur 3 comprend un corps et une bague rapportée 7 qui est emmanchée sur la surface extérieure dudit corps, l'extrémité avant de ladite surface étant en outre repliée extérieurement pour assurer le maintien axial de ladite bague sur ladite surface. Par ailleurs, une piste de roulement est réalisée sur la bague 7 et l'autre piste de roulement est réalisée sur le corps. Toutefois, l'invention n'est pas limitée à ce mode de réalisation du palier, en particulier relativement à la présence de la bride 2, à la réalisation du chemin de roulement, à la géométrie des corps roulants 5, à la géométrie des organes fixe 1 et tournant 3.

Par ailleurs, dans les modes de réalisation représentés, le palier comprend un codeur 8 qui est solidarisé à l'organe tournant 3 sur un côté de l'espace de roulement. En effet, lorsque l'on veut connaître la vitesse de rotation, le sens de déplacement et/ou la position angulaire de l'organe tournant 3 par rapport à l'organe fixe 1, il est connu d'utiliser un système capteur d'informations comprenant un codeur 8 générateur d'impulsions magnétiques et un capteur fixe muni d'au moins un élément sensible apte à détecter ces impulsions.

Le codeur 8 représenté comprend une armature 9, par exemple réalisée en tôle emboutie, qui comprend une portée axiale d'emmanchement sur le diamètre extérieur d'une portée de l'organe tournant 3, et une portée radiale sur laquelle le moyen générateur d'impulsions magnétiques est solidarisé.

Dans un exemple de réalisation, le moyen générateur est formé d'un aimant multipolaire 10 en matériau synthétique qui est surmoulé sur la portée radiale, ledit matériau étant chargé de particules magnétiques de sorte à former une pluralité de pôles contigus à direction d'aimantation inversée d'un pôle par rapport aux deux pôles contigus.

En relation avec ce type de codeur, un ou plusieurs éléments sensibles comprenant des sondes à effet Hall ou des magnétorésistances permettent de délivrer un ou plusieurs signaux analogiques sinusoïdaux qui sont notamment représentatifs de la vitesse de rotation du codeur 8.

Pour protéger l'espace de roulement de la pollution du milieu environnant, le palier comprend en outre un capot 11 solidaire de l'organe fixe 1 pour recouvrir latéralement ledit espace de roulement. En outre, le codeur 8 est disposé derrière le capot 11 afin d'être également protégé des polluants par ledit capot.

Le capot 11 comprend un disque plein 12 dont la géométrie est agencée pour empêcher la pénétration des polluants depuis un espace avant (à droite sur les figures) dans un espace arrière (à gauche sur les figures) dans lequel est disposé l'espace de roulement. En particulier, le disque 12 représenté comprend une portion centrale 13 qui est décalée axialement vers l'avant par rapport à une portion latérale 14, lesdites portions étant reliées par un congé axi-radial 15 de raccordement.

Ainsi, l'extrémité avant de l'organe tournant 3 est logée dans la portion centrale 13 sans interférer avec la rotation dudit organe tournant. En outre, le codeur 8 est disposé en regard de la portion latérale 14 avec un espacement axial minimal afin de limiter la distance de lecture entre ledit codeur et le capteur (non représenté) qui est destiné à être disposé devant ladite portion latérale.

Le disque 12 est également pourvu d'une armature périphérique rigide 16 qui est emmanchée sur une portée de l'organe fixe 1 afin de réaliser la solidarisation du capot 11 sur l'organe fixe 1. En particulier, l'armature 16 s'étend sur toute la périphérie de la portion latérale 14 du disque 12, par exemple en étant de géométrie annulaire. L'armature 16 peut être réalisée à base de matériau métallique, par exemple en tôle emboutie, de sorte à fiabiliser mécaniquement l'association du capot 11 sur l'organe fixe 1.

Par ailleurs, pour fiabiliser l'étanchéité conférée par le capot 11 relativement à la pénétration des polluants dans l'espace de roulement, l'armature 16 est équipée d'un bourrelet d'étanchéité 17 de l'emmanchement entre ladite armature et la portée de l'organe fixe 1. En particulier, cette fonction d'étanchéité est ainsi dissociée de la fonction de montage de sorte à pouvoir fiabiliser chacune desdites fonctions de façon indépendante.

Dans les modes de réalisation représentés, le bourrelet d'étanchéité 17 comprend une partie qui est en appui étanche entre l'armature 16 et l'organe fixe 1, ledit appui empêchant tout passage de polluant à l'interface entre ladite armature et ledit organe fixe.

De façon avantageuse, le bourrelet d'étanchéité 17 peut être réalisé à base de matériau élastomère. En outre, le bourrelet d'étanchéité 17 peut être fabriqué par moulage et être monté sur l'armature 16, par exemple en prévoyant qu'il soit surmoulé sur ladite armature. Par ailleurs, comme représenté sur les figures, le bourrelet d'étanchéité 17 peut être venu de matière avec le disque 12, ledit disque pouvant alors être également réalisé à base de matériau élastomère et être monté sur l'armature 16 par surmoulage. En particulier, cette réalisation de capot 11 souple permet également la respiration du palier lors de son utilisation.

En variante non représentée, le bourrelet d'étanchéité 17 et le disque 12 peuvent être réalisés séparément. Ainsi, il est possible d'avoir un disque 12 dont le matériau constitutif n'est pas le même que celui du bourrelet d'étanchéité 17, par exemple en étant en matériau plastique ou métallique. Dans cette variante, le disque 12 peut être rigide et l'armature 16 peut alors être venue de matière avec ledit disque.

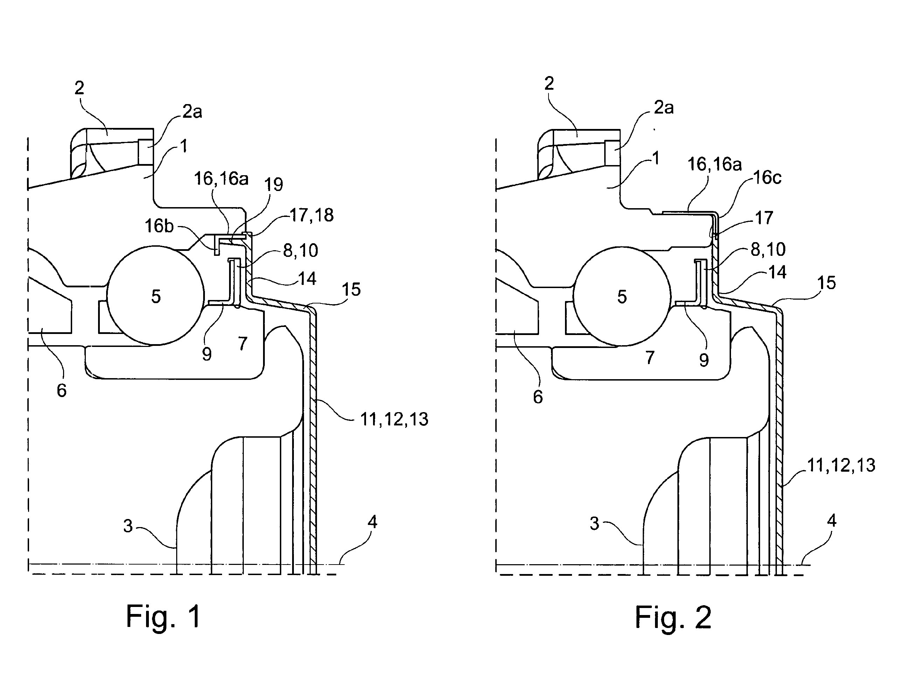

Dans les modes de réalisation représentés, l'armature 16 comprend une portée axiale 16a qui est emmanchée sur une portée axiale de l'organe fixe 1. En relation avec la figure 1, la portée axiale de l'organe fixe 1 est disposée intérieurement, la portée axiale 16a de l'armature 16 présentant une face extérieure d'emmanchement.

Dans ce premier mode de réalisation, le bourrelet d'étanchéité 17 présente un talon 18 qui est disposé sur l'avant de la portée axiale 16a de l'armature 16. Plus précisément, le disque 12 présente une lèvre axiale arrière 19 qui est associée sur la face intérieure de la portée axiale 16a, ladite portée étant prolongée vers l'arrière par une portée radiale 16b.

En outre, le talon 18 s'étend radialement vers l'extérieur depuis la base de la lèvre 19 pour recouvrir le bord avant de la portée axiale 16a, ledit talon saillant dudit bord pour être disposé en appui étanche sur l'avant de la portée axiale 16a en occultant la partie avant de l'emmanchement.

En relation avec la figure 2, la portée axiale de l'organe fixe 1 est disposée extérieurement, la portée axiale 16a de l'armature 16 présentant une face intérieure d'emmanchement.

Dans ce deuxième mode de réalisation, l'armature 16 présente une portée radiale avant 16c qui est reliée à la portée axiale 16a, la face arrière de ladite portée radiale portant le bourrelet d'étanchéité 17 qui est disposé en appui sur une portée radiale de l'organe fixe 1.

## Revendications

1. Palier à roulement comprenant un organe intérieur tournant (3), un organe extérieur fixe (1) et des corps roulants (5) disposés dans un espace de roulement formé entre lesdits organes pour permettre leur rotation relative, ledit palier comprenant en outre un capot (11) solidaire de l'organe fixe (1) pour recouvrir latéralement ledit espace de roulement, ledit palier étant **caractérisé en ce que** le capot (11) comprend un disque (12) pourvu d'une armature périphérique rigide (16) qui est emmanchée sur une portée de l'organe fixe (1), ladite armature étant équipée d'un bourrelet d'étanchéité (17) dudit emmanchement.

2. Palier à roulement selon la revendication 1, **caractérisé en ce que** le bourrelet d'étanchéité (17) comprend une partie qui est en appui étanche entre l'armature (16) et l'organe fixe (1).

3. Palier à roulement selon la revendication 1 ou 2, **caractérisé en ce que** le bourrelet d'étanchéité (17) et/ou le disque (12) est associé à l'armature (16), notamment par surmoulage.

4. Palier à roulement selon l'une quelconque des revendications 1 à 3, **caractérisé en ce que** le bourrelet d'étanchéité (17) est venu de matière avec le disque (12).

5. Palier à roulement selon l'une quelconque des revendications 1 à 4, **caractérisé en ce que** le bourrelet d'étanchéité (17) et éventuellement le disque (12) sont réalisés à base de matériau élastomère.

6. Palier à roulement selon l'une quelconque des revendications 1 à 5, **caractérisé en ce que** l'armature (16) est réalisée à base de matériau métallique.

7. Palier à roulement selon l'une quelconque des revendications 1 à 6, **caractérisé en ce que** l'armature (16) comprend une portée axiale (16a) qui est emmanchée sur une portée axiale de l'organe fixe (1).

8. Palier à roulement selon la revendication 7, **caractérisé en ce que** la portée axiale de l'organe fixe (1) est disposée intérieurement, le bourrelet d'étanchéité (17) présentant un talon (18) disposé sur l'avant de la portée axiale (16a) de l'armature (16).

9. Palier à roulement selon la revendication 7, **caractérisé en ce que** la portée axiale de l'organe fixe (1) est disposée extérieurement, l'armature (16) présentant une portée radiale avant (16c) reliée à la portée axiale (16a), la face arrière de ladite portée radiale portant le bourrelet d'étanchéité (17) qui est disposé en appui sur une portée radiale de l'organe fixe (1).

10. Palier à roulement selon l'une quelconque des revendications 1 à 9, **caractérisé en ce qu'**il comprend en outre un codeur (8) qui est solidarisé à l'organe tournant (3) derrière le capot (11).
